# EUROPEAN PATENT SPECIFICATION

(11) **EP 3 436 981 B1**
(45) Date of publication and mention of the grant of the patent: **24.06.2020**
(21) Application number: 17716682.4
(22) Date of filing: 22.03.2017
(51) Int. Cl.: G06F 16/9537, G06F 16/909

(54) **INKING INPUTS FOR DIGITAL MAPS**
EINFÄRBUNGSEINGABEN FÜR DIGITALE KARTEN
ENTRÉES D'ENCRAGE POUR CARTES NUMÉRIQUES

(30) Priority: 28.03.2016 US 201662314290 P; 13.06.2016 US 201615181013
(43) Date of publication of application: 06.02.2019
(73) Proprietor: Microsoft Technology Licensing, LLC, Redmond, WA 98052-6399 (US)
(72) Inventor: TORRES, Silvana, Moncayo, Redmond, Washington 98052-6399 (US); SETHI, Kshitij, Redmond, Washington 98052-6399 (US); ANDREW, Felix, Redmond, Washington 98052-6399 (US); MAERTENS, Katherine, Redmond, Washington 98052-6399 (US); SMITH, Douglas, Redmond, Washington 98052-6399 (US)
(74) Representative: CMS Cameron McKenna Nabarro Olswang LLP
(86) International application number: PCT/US2017/023503
(87) International publication number: WO 2017/172429

(56) References cited:
- US-A1- 2008 184 173
- US-A1- 2010 083 117
- US-A1- 2015 330 806
- CHEYER A ET AL: "Multimodal Maps: An Agent-based Approach", ELECTRONIC PUBLISHING, ARTISTIC IMAGING, AND DIGITAL TYPOGR; [LECTURE NOTES IN COMPUTER SCIENCE , ISSN 0302-9743], SPRINGER VERLAG, DE, vol. 1374, 24 May 1995 (1995-05-24), pages 111-121, XP008092585, ISBN: 978-3-540-24128-7

## Description

### BACKGROUND

Computing devices may display maps to help a user to determine a route to reach a destination, plan out an itinerary for a trip, or perform other functions. For example, a user may enter a starting location and a destination location, and the computing device may display on the map indications of one or more routes between the starting location and the destination location.

US 2008/0184173 A1 discloses a technology for controlling multiple map application operations with a single gesture. In one embodiment, data describing a single gesture that was inked on a map application output displayed on a device is received. The data is utilized to control multiple operations of the map application.

Cheyer A Et Al, "Multimodal Maps: An Agent-Based Approach", Electronic Publishing, Artistic Imaging, And Digital Typogr; [Lecture Notes In Computer Science , Issn 0302-9743], Springer Verlag, De, (19950524), Vol. 1374, ISBN 978-3-540-24128-7, Pages 111 - 121, discloses how multiple input modalities may be combined to produce more natural user interfaces. To illustrate the technique, the paper presents a prototype map-based application for a travel planning domain. The application is distinguished by a synergistic combination of handwriting, gesture and speech modalities; access to existing data sources including the World Wide Web; and a mobile handheld interface. To implement the described application, a hierarchical distributed network of heterogeneous software agents is augmented by appropriate functionality for developing synergistic multimodal applications.

### SUMMARY

According to aspects of the present invention there is provided a method, a computing system and a computer-readable medium as defined in the accompanying claims.

Examples are disclosed that relate to inking inputs made to a map displayed on a computing device. One example provides, on a computing device, a method comprising displaying a map via a display device operatively coupled to the computing device, receiving user input of one or more inking inputs made relative to the displayed map, and in response displaying over the map an annotation for each inking input received. The method further comprises determining a map location of each of the one or more inking inputs, determining an intended meaning of each of the one or more inking inputs based upon one or more features of the inking inputs, and performing an action on the computing device based at least on the map location and the intended meaning determined for each of the one or more inking inputs.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows an example computing device displaying an example map.
FIG. 2 is a flow diagram illustrating an example method for performing actions based on inking input made to a map application.
FIGS. 3A-5 are examples of maps showing inking inputs.
FIG. 6 schematically shows an example computing system.

### DETAILED DESCRIPTION

Map applications on computing devices may allow a user to plan trips or choose an efficient route to reach a given destination via a graphical user interface that displays a map to the user. However, such maps may require the user to type a starting address and a destination into text entry fields to generate a route, and may generate and display a route based upon efficiency, sometimes with alternative routes. If different modes of transportation or different routes are preferred, an application may require a user to enter additional input selecting a route via another transportation mode (e.g. a bus or train), moving the route to a more scenic one, etc. Such interactions with the map may be cumbersome and/or time-consuming. Further, a user may not be able to create a multi-day itinerary that is displayed on a single map page, nor may a user be able to conveniently select multiple destinations within a region and have a route automatically determined by the map application.

Thus, examples are disclosed herein that may help to address these and other issues. Briefly, a user may make inking inputs to a map application that is displaying a map on a computing device, and the computing device may interpret the inking input and perform associated actions in response to the inking input. As used herein, the term ink or inking may refer to annotations to displayed content (e.g. a displayed map) in the form of displayed marks/strokes made via an input device, and the term inking input and the like represent inputs used to input such inking. Such inputs may be made via a stylus or finger on a touch sensor, via a gesture detection system (e.g. one or more cameras, depth cameras and/or motion sensors configured to capture body part gestures, such as finger/arm/eye gestures), or via any other suitable input mechanism.

In some examples, the user may create links between inking input features (e.g. inking shapes, inking text, inking line types (dashed v. solid), inking colors, inking input velocity characteristics, inking input pressure characteristics, etc.) and specific actions a map application may perform. For example, a map application may provide a "planning a trip mode" in which a user is instructed to use pen or touch to select or draw a shape per each day/week he or she is going to be on the trip. The user may designate a title for each shape, such as the day of the week associated with that shape. Next, the user may draw the designated shapes onto the map using inking inputs to indicate locations that the user wishes to visit each day/week of the trip. For example, circles could be drawn at selected locations to represent places to visit on Monday, squares to represent places to visit on Tuesday, and a shape associated with "don't forget" (or the actual words "don't forget") may be used for must-see places. While the user is drawing the shape on top of the places desired to visit, an inking engine saves the path into a "recognizer" for the future. In some examples, a user may enter text-based inking inputs in addition or alternatively to the shape-based inking inputs, and the text-based inputs may be recognized by a word recognizer. For example, a user may circle a destination and write Monday next to the circle to represent the location is a place to visit on Monday. After drawing the items, a new sub-collections folder or list may be created under a "trip itinerary" collection, either automatically or by user input (e.g. selection of a "done" user interface control) signifying that the locations for that trip have been entered. The user may then see a single view of the map with the whole itinerary, may filter the map view by day (e.g. to show just Monday's places, just must-see places, etc.) or arrange the view by any other suitable categories, and/or take other suitable actions.

Furthermore, one or more of those places may have additional detail displayed (e.g. as a "card" associated with the item). The card may have any suitable information about a location, including but not limited a phone number, address, pictures, etc. The information displayed on the card may be obtained in any suitable manner, such as via a web search conducted by the computing device upon receiving the inking input associated with the location.

Thus, by informing the map application what shapes to recognize, a user may quickly and easily enter trip information on a map and then display the trip information in various different ways. It will be understood that each shape or other annotation may be given any desired meaning based upon how the user later wishes to view the information. As another example, shapes or other annotations may be defined by a type of location (e.g. waterfalls, wineries, state parks, etc.), and routes may be planned between locations of desired types by filtering the view by location type.

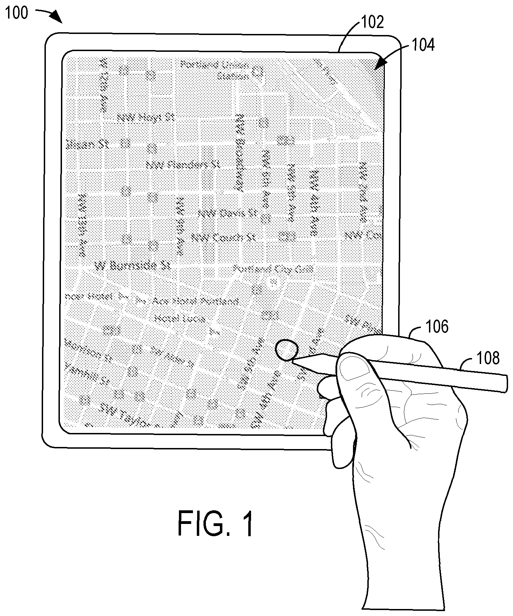

FIG. 1 shows an example computing device 100 configured to accept stylus and/or finger-based touch input for making inking inputs to an application executed on the device. Computing device 100 includes a display 102 illustrated as presenting a user interface 104 of a map application. The depicted view shows a single application panel for the map application, but more than one panel may be displayed at a time in some examples. Further, in some examples, a map application may be embedded in the user interface of another application (e.g. an application for providing reviews of restaurants or other businesses, a search engine results interface, etc.).

FIG. 1 depicts the computing device 100 as a tablet, but the examples disclosed herein may be implemented on any other suitable computing device for receiving inking inputs, including but not limited to smart phones, smart watches, desktop or laptop computers, head-mounted computing devices, in-vehicle navigation systems, and/or other device including or communicatively coupled to a touch sensitive display, other touch sensor (e.g. a trackpad), mouse, camera(s) (e.g., for recognizing gestures), microphone (e.g., for recognizing voice commands), and/or other suitable input device(s). In another example, computing device 100 may include a large-format and/or wall-mounted display with an integrated touch sensor, digitizer, and/or other input sensor for collaborative activities.

A user's hand 106 is illustrated in FIG. 1 holding an input device 108 in the form of a stylus. In other examples, any suitable input device, such as a finger or other suitable object, may be utilized to provide inking input to the computing device 100. The input device 108 is shown marking a displayed location (an intersection in this example) on the map. Inking inputs may include hand-drawn shapes, connectors/arrows, handwritten text, and/or other suitable elements.

In response to receiving the inking input, computing device 100 may execute one or more actions associated with the inking input. For example, in response to receiving the circle annotation around the intersection on the map, the computing device may display information associated with that location (e.g., address, business information, etc.). Also, the computing device 100 may use the circled location as a starting location for a route, as described in more detail below, or may execute any other suitable function in response to detecting and interpreting the inking input.

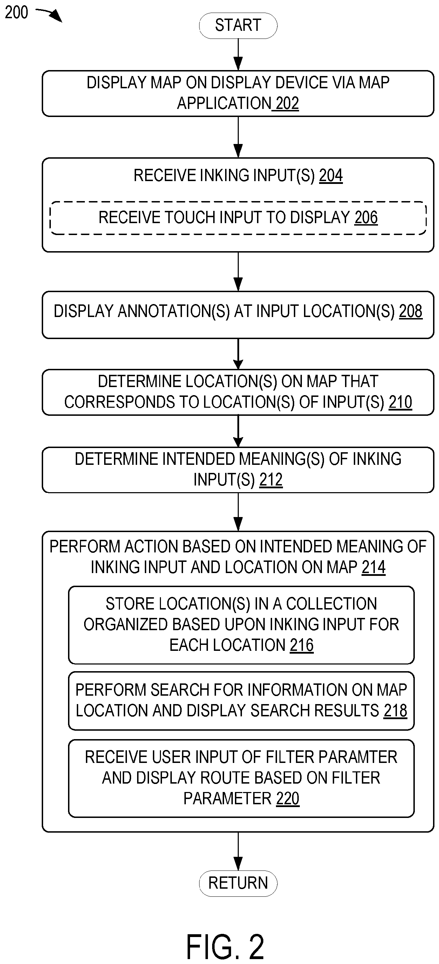

FIG. 2 shows a flow diagram depicting an example method 200 for performing one or more actions in response to inking inputs made to a map displayed on a computing device via a mapping application (whether executed as a primary application or embedded in another application). Method 200 may be carried out by any suitable computing device, such as computing device 100 above. At 202, method 200 includes displaying a map on a display device via a map application. The map may take any suitable form, and may be displayed in a primary user interface of the mapping application, or as embedded in the user interface of another application. The map-based application may obtain the map data from a map database located remotely from the computing device, or the map data may be stored locally on the computing device. In one example, displaying the map may include sending the map to an operatively coupled display device configured to display the map.

At 204, method 200 includes receiving an inking input. For example, the inking input may include touch input made to a touch-sensitive display via stylus or finger, as indicated at 206, or may include any other suitable input. At 208, method 200 includes displaying an annotation as inking on the map (e.g. a graphical representation of a path of the inking input), and at 210, determining a location on the map that corresponds to the location of the inking input. When the inking input covers more than one map address (e.g., a user-input circle inadvertently includes multiple map addresses), any suitable mechanism may be used to disambiguate which address the user intended to ink over, including but not limited to identifying the center-most location, identifying a most likely location (e.g. the largest town within the inking input area), identifying a most popular address (e.g. based upon prior behavior of the user and/or other users as tracked via a remotely located map server), or other suitable mechanism. Further, some inking inputs may be intended to select multiple locations. In such instances, each of the multiple locations may be associated with the inking input.

At 212, method 200 includes determining an intended meaning of the inking input. The intended meaning may be determined in any suitable manner. In one example, the computing device may store a table or other data structure that indexes inking input features (e.g., annotation shapes, words, numbers, colors, input characteristics such as speed or pressure, etc.) to respective intended meanings. The association between each inking input feature and intended meaning may be predetermined (e.g. coded into the application at development time), or may be user-defined. In one example, the computing device may display a drop-down menu each time the user enters an inking input with a new feature, and the user may select from among a list of possible meanings displayed within the drop-down menu in order to assign a meaning to the inking input feature. In another example, the computing device may learn which meaning the user intended to input based on previous user interactions with the map application. In yet another example, a user may define a first use instance of an inking input feature with text input (e.g. also made by inking), wherein the text defines the meaning of the inking feature. In such examples, the computing device may interpret the inked text and then store the interpretation of the inked text as the intended meaning for that feature. One example of such an input would be an inking input associating a shape with a day of the week. Additionally, an intended meaning may be determined collectively for multiple inking inputs, such as where a user draws two circles on a map, one representing a starting location and one representing a destination location, to determine a route between the locations.

Any suitable features of an inking input may be identified to determine an intended meaning. Examples include, but are not limited to, a shape of the inking input, a color of the inking input, a size of the inking input, a pressure of the user input strokes, a pattern of the input strokes (e.g. solid v. dashed), and a speed of the user input strokes. Determining the shape of the inking input may include, for example, determining whether the input comprises a straight line, circle, square, or other shape, determining whether the shape includes solid lines, dashed lines, or other line type, and determining whether letters and/or numbers are represented by the inking input (e.g. identifying text in the inking input). In some instances the user may enter more than one inking input (e.g., the user may circle two locations and draw a line between them), and the map location and features of each inking input may be determined. In such an example, a solid line drawn between the circles may represent one desired route characteristic (e.g. most efficient) while a dashed line may indicate another desired route characteristic (e.g. most scenic). In each of the examples described above, the intended meaning of the inking input also may be determined based at least in part on the features of the map displayed, such as level of zoom, geographic features represented by the map (e.g., ocean versus land), and/or other features. For example, if the map is displayed at a relatively low level of zoom (e.g., an entire continent is displayed), the computing device may determine that the user intends to determine a route via plane rather than via bus or bike.

Continuing with FIG. 2, at 214, method 200 includes performing an action on the computing device based on the determined intended meaning of each inking input. The action may include, for example, storing each location in a collection that is organized based upon the inking inputs for each location (e.g. days of the week, types of locations, etc.) 216, performing a search for information on a location associated with an inking input and displaying the search results 218, displaying a route on the map that includes one or more of the locations, filtering the display of a route based upon one or more filter parameters input by a user 220, displaying text driving directions, performing an airline search for flights along a route on the map, calculating square mileage within boundary points defined by the inking input, and/or any other suitable action that may be performed in the context of a map application.

Thus, in some examples, the computing device may receive a plurality of user-defined meanings each associated with an associated inking input, via user input/selection of the meanings and associated inking inputs. When a map is displayed, the user may enter two or more inking inputs on the displayed map. The computing device may receive these inking inputs and determine a map location of each of the two or more inking inputs as well as the intended meaning of each of the two or more inking inputs based upon the plurality of user-defined meanings provided previously. In response to receiving the two or more inking inputs, the computing device may display a route between corresponding locations of the two or more inking inputs. The route may be selected from among a plurality of possible routes based on the intended meaning of each inking input. For example, as described above, a scenic route may be selected when the inking inputs indicating the corresponding locations are linked with a dashed or arc-shaped line, while a fastest route may be selected when the inking input between the corresponding locations is a solid straight line.

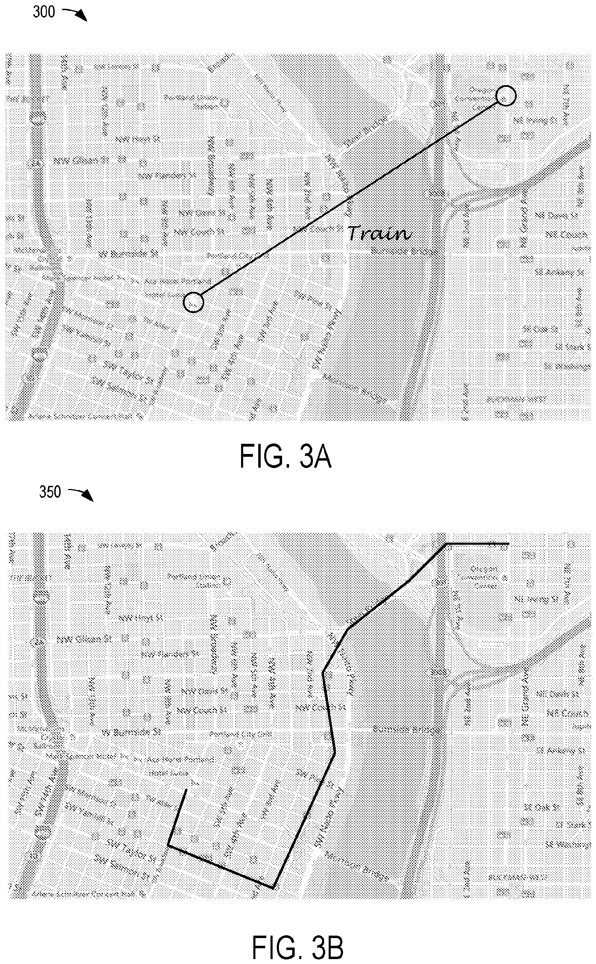

FIGS. 3A-5 illustrate examples of maps with various inking annotations according to examples of the disclosure. First, FIG. 3A shows a map 300 on which a user has entered an inking input by circling two locations on the map 300 and drawing a straight line in between the two locations. Further, the user has written the word "train" on map 300. In response, the computing device determines that the intended meaning of the two circles and intervening straight line is "fastest route." The computing device further determines that the intended meaning of the word train is that the user wants the fastest route via train, rather than other transportation modes.

Accordingly, as shown in FIG. 3B, the computing device displays map 350, which includes a route between the two circled locations via train, as shown by the blue line. While not shown in FIG. 3B, it is be understood that the computing device may additionally or alternatively display instructions on how to follow the route, train times, or other suitable information.

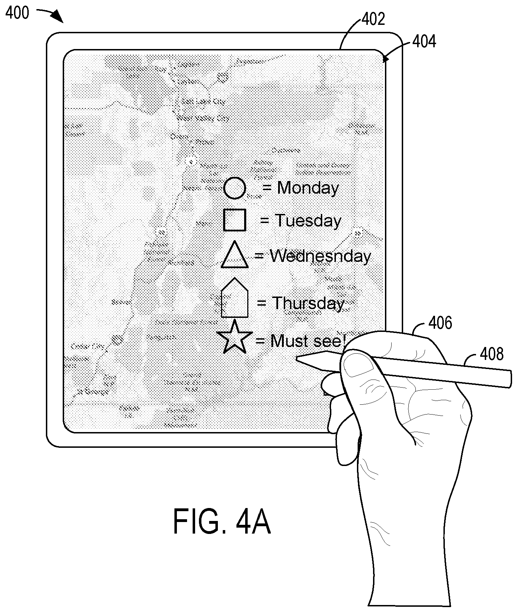

Next, FIG. 4A shows a computing device 400 including a display 402 that is displaying a map 404. A user may be planning a multi-day trip through the American southwest, for example, and thus may annotate the map to indicate which stops the user intends to make on various days of the trip. Prior to annotating the map, the user may specify the intended meanings of a plurality of inking inputs. Thus, as shown, user's hand 406 is entering input via input device 408 to indicate that circle inkings indicate stops for the Monday of the trip, square inkings indicate stops for the Tuesday of the trip, triangle inkings indicate stops for the Wednesday of the trip, pentagon annotations indicate stops for the Thursday of the trip, and star inkings indicate must-see stops along the entire trip. In other examples, the user may utilize predefined symbols and/or predefined definitions for symbols.

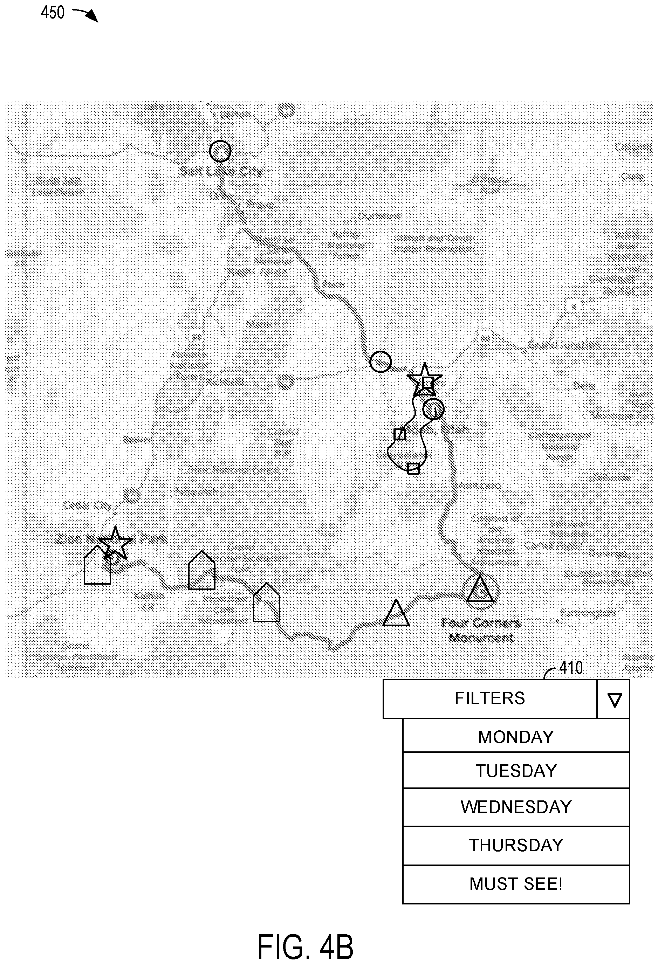

FIG. 4B shows a map 450 displaying the multi-day itinerary input as in FIG. 4A. As shown by displayed annotations, the user has entered inking inputs indicative of desired stops for each day of a multi-day trip via inking inputs drawn on the map, and the computing device has displayed a route that includes all the stops specified by the user. In this view, each circle may represent stops on a first day, each square may represent stops on a second day, each triangle may represent stops on a third day, and each pentagon may represent stops on a fourth day. The computing device has calculated a route that includes each stop, which is displayed on the map. The entire multi-day itinerary may be displayed on a single page, as shown, or the itinerary may be filtered by day or other parameter, for example, by selecting a filter from a user interface (e.g. a drop-down menu 410 of selectable parameters, or other suitable presentation).

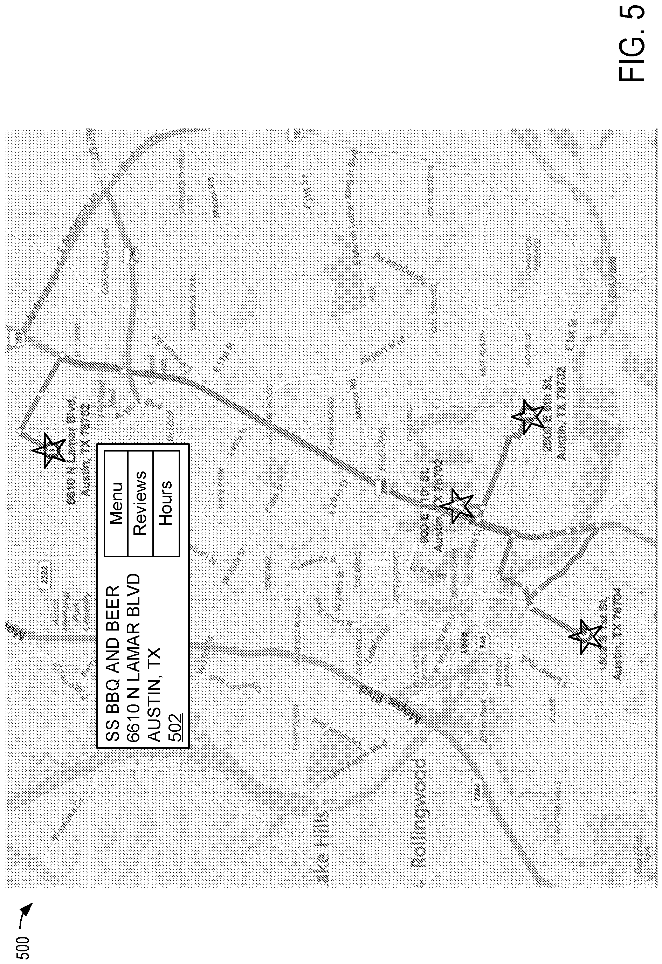

FIG. 5 shows another example map 500 that includes annotations of a BBQ tour through Austin, Texas. A user has identified the locations of various BBQ restaurants via the star annotations, and the computing device has designated the restaurants by alphabetical code (A-D) and calculated a route between each location. In some examples, each starred location may be saved into a collection that may be shared with other users, for example. Information regarding each location in the collection also may be included in the collection, e.g., restaurant hours, menus, etc. For example FIG. 5 illustrates a card 502 displaying information for restaurant location D, including links to menus, reviews, hours, etc. The information regarding each location may be obtained through an automatic search executed based upon what information is associated with the location of the inking (e.g., the map-based application may determine a business name associated with a location on the map, and then perform a search on that business), or in any other suitable manner.

Thus, inking inputs may be used as a way to express different collections on a map or as a way to quickly determine map-related operations, such as a route between a set of points on the map. Inking inputs further may be used to perform other functions than those shown. For example, in the case of a route calculation, a specific-shaped inking input may be used to indicate the user desires the fastest route between the two points instead of having to fill in the "From" and "To" on a Directions search box, then click on go, and then turn on traffic. For example, as explained above a straight lines drawn between two locations may indicate a fastest route is desired, while an arc-shaped line drawn between two locations may indicate that a scenic route is desired. Further, a user may use an inking input to enter a time of day he or she would like to arrive or start their trip, e.g., "Start at 9AM" next to a star symbol, and the routing algorithm would start that route at 9AM. This may help to choose a route depending upon daily traffic patterns. Further still, a user may write "Bus" or "Train" to indicate that they would like the route to be via transit, instead of driving.

As another example, a user may draw a "reminder" symbol on a map along with additional information via text (e.g., dinner Wednesday at 7), and the computing device may store and later output a reminder to the user to attend dinner at the specified location at the specified time. In some examples, the computing device may communicate the actions associated with the annotations to a personal assistant device/application or other communicatively coupled device. As such, a personal assistant device may receive the reminder from the map application and then later output the reminder.

In some examples, the methods and processes described herein may be tied to a computing system of one or more computing devices. In particular, such methods and processes may be implemented as a computer-application program or service, an application-programming interface (API), a library, and/or other computer-program product.

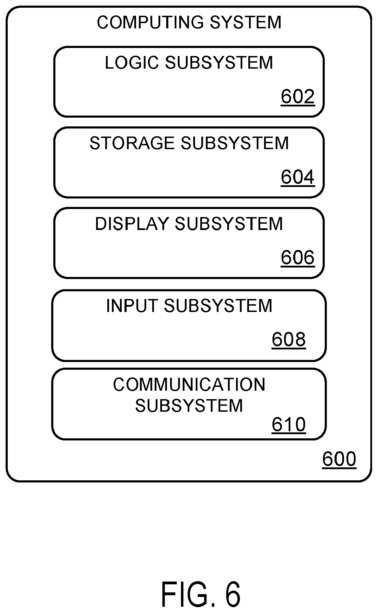

FIG. 6 schematically shows a non-limiting example of a computing system 600 that can enact one or more of the methods and processes described above. Computing system 600 is shown in simplified form. Computing system 600 may take the form of one or more personal computers, server computers, tablet computers, home-entertainment computers, network computing devices, gaming devices, mobile computing devices, mobile communication devices (e.g., smart phone), and/or other computing devices. Computing device 100 is one non-limiting example of computing system 600.

Computing system 600 includes a logic machine 602 and a storage machine 604. Computing system 600 may optionally include a display subsystem 604, input subsystem 606, communication subsystem 608, and/or other components not shown in FIG. 6.

Logic machine 602 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage machine 604 includes one or more physical devices configured to hold instructions executable by the logic machine to implement the methods and processes described herein. When such methods and processes are implemented, the state of storage machine 604 may be transformed-e.g., to hold different data.

Storage machine 604 may include removable and/or built-in devices. Storage machine 604 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 604 may include volatile, nonvolatile, dynamic, static, read/write, read-only, random-access, sequential-access, location-addressable, file-addressable, and/or content-addressable devices.

It will be appreciated that storage machine 604 includes one or more physical devices. However, aspects of the instructions described herein alternatively may be propagated by a communication medium (e.g., an electromagnetic signal, an optical signal, etc.), as opposed to being stored on a storage medium.

Aspects of logic machine 602 and storage machine 604 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, display subsystem 606 may be used to present a visual representation of data held by storage machine 604. This visual representation may take the form of a graphical user interface (GUI). As the herein described methods and processes change the data held by the storage machine, and thus transform the state of the storage machine, the state of display subsystem 606 may likewise be transformed to visually represent changes in the underlying data. Display subsystem 606 may include one or more display devices utilizing virtually any type of technology. Such display devices may be combined with logic machine 602 and/or storage machine 604 in a shared enclosure, or such display devices may be peripheral display devices.

When included, input subsystem 608 may comprise or interface with one or more user-input devices such as a keyboard, mouse, touch screen, or game controller. In some examples, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 610 may be configured to communicatively couple computing system 600 with one or more other computing devices. Communication subsystem 610 may include wired and/or wireless communication devices compatible with one or more different communication protocols. As non-limiting examples, the communication subsystem may be configured for communication via a wireless telephone network, or a wired or wireless local- or wide-area network. In some examples, the communication subsystem may allow computing system 600 to send and/or receive messages to and/or from other devices via a network such as the Internet.

Another example provides a method enacted on a computing device. The method includes displaying a map on a display device operatively coupled to the computing device, receiving user input of one or more inking inputs on the displayed map and displaying an annotation for each inking input received, determining a map location of each of the one or more inking inputs, determining an intended meaning of each of the one or more inking inputs based upon one or more features of the one or more inking inputs, and performing an action on the computing device based at least on the map location and the intended meaning determined for each of the one or more inking inputs. The inking input may additionally or alternatively include a shape, and the intended meaning may additionally or alternatively be determined based at least in part on the shape. The inking input may additionally or alternatively include text, and the intended meaning may additionally or alternatively be determined based at least in part on the text. The inking input may additionally or alternatively include a color, and the intended meaning may additionally or alternatively be determined based at least in part on the color. Determining the intended meaning of each of the one or more inking input may additionally or alternatively include determining a predefined meaning associated with each feature of the one or more features of the one or more inking inputs. Determining the intended meaning of each of the one or more inking inputs may additionally or alternatively include determining a user-defined meaning associated with each feature of the one or more features of the one or more inking inputs. Such an example may additionally or alternatively further include performing a search for information regarding a location associated with a selected inking input, and displaying search results for the location associated with the selected inking input. Receiving user input of one or more inking inputs on the displayed map may additionally or alternatively include receiving a plurality of inking inputs at a plurality of corresponding locations, and performing an action may additionally or alternatively include displaying a route between the plurality of corresponding locations. The plurality of inking inputs may additionally or alternatively include two or more different inking inputs that represent different filtering parameters, and such an example may additionally or alternatively include receiving a user input requesting to apply a filtering parameter to display a route between locations corresponding to the filtering parameter applied, and in response displaying a route between the locations based upon the filtering parameter applied. Performing an action may additionally or alternatively include performing a search for information on a selected location associated with an inking input, and displaying search results for the selected location. Any or all of the above-described examples may be combined in any suitable manner in various implementations.

Another example provides for a computing system including a display device, a processor, and memory storing instructions executable by the processor to send a map to the display device, the display device configured to display the map, receive user input of one or more inking inputs on the displayed map, determine a map location of each of the one or more inking inputs, determine an intended meaning of each of the one or more inking inputs based upon one or more features of each inking input, and perform an action based at least on the determined map location and the intended meaning of each inking input. The instructions may additionally or alternatively be executable to determine the intended meaning for each inking input based at least in part on a shape of the inking input. The instructions may additionally or alternatively be executable to determine the intended meaning from text represented by the inking input. The instructions may additionally or alternatively be executable to determine the intended meaning from an inking input color. The instructions may additionally or alternatively be executable to determine a predefined meaning associated with each of one or more of the inking inputs. The instructions may additionally or alternatively be executable to determine a user-defined meaning associated with each of one or more of the inking inputs. The instructions may additionally or alternatively be executable to perform a search for information regarding a location associated with a selected inking input, and display search results for the location associated with the selected inking input. The instructions may additionally or alternatively be executable to receive a plurality of inking inputs at a plurality of corresponding locations, and to perform an action by displaying a route between the plurality of corresponding locations. The plurality of inking inputs may additionally or alternatively include two or more different inking inputs that represent different filtering parameters, and the instructions may additionally or alternatively be executable to receive a user input requesting to apply a filtering parameter to display a route between locations corresponding to the filtering parameter applied, and in response display a route between the locations based upon the filter parameter applied. Any or all of the above-described examples may be combined in any suitable manner in various implementations.

Another example provides a computing system including a display device, a processor, and memory storing instructions executable by the processor to receive a plurality of user-defined meanings each associated with an associated inking input, display a map on the display device, receive user input of two or more inking inputs on the displayed map, determine a map location of each of the two or more inking inputs, determine an intended meaning of each of the two or more inking inputs based upon the plurality of user-defined meanings, and display a route between corresponding locations of the two or more inking inputs, the route selected from among a plurality of possible routes based on the intended meaning of each inking input.

It will be understood that the configurations and/or approaches described herein are exemplary in nature, and that these specific examples or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and nonobvious combinations and subcombinations of the various processes, systems and configurations, and other features, functions, acts, and/or properties disclosed herein, as well as any and all equivalents thereof.

## Claims

1. Enacted on a computing device, a method comprising:
displaying (202) a map on a display device operatively coupled to the computing device;
receiving (204) user input of a first inking input and a second inking input on the displayed map, the first inking input and the second inking input each comprising one or more of a color, a shape, and/or a text defining one or more filter parameters;
displaying an annotation (208) on the display device for each inking input received;
determining a map location (210) of each inking input received;
identifying the one or more filter parameters of each of the first inking input and the second inking input;
displaying (218) on the display device one or more of a route and a collection of map locations;
receiving user input (220) selecting one or more filters, the one or more filters based on the one or more filter parameters associated with each of the first inking input and the second inking input; and
filtering the display of the one or more of the route and the collection of map locations based on the one or more filters selected.

2. The method of claim 1, wherein each of the first inking input and the second inking input comprises a shape, and wherein filtering the display is based at least in part on the shape.

3. The method of claim 1, wherein each of the first inking input and the second inking input comprises text, and wherein the filtering the display is based at least in part on the text.

4. The method of claim 1, wherein each of the first inking input and the second inking input comprises a color, and wherein the filtering the display is based at least in part on the color.

5. The method of claim 1, wherein identifying the one or more filter parameters comprises determining a predefined meaning associated with the color, the shape, and/or the text.

6. The method of claim 1, wherein identifying the one or more filter parameters comprises determining a user-defined meaning associated with the color, the shape, and/or the text.

7. The method of claim 1, further comprising, after identifying the one or more filter parameters, performing a search for information regarding a location associated with a selected inking input, and further comprising displaying search results for the location associated with the selected inking input.

8. The method of claim 1, wherein receiving user input of the first inking input and the second inking input on the displayed map further comprises receiving user input of a plurality of inking inputs at a plurality of corresponding locations, and wherein displaying the route comprises displaying the route between the plurality of corresponding locations.

9. The method of claim 8, wherein the plurality of inking inputs comprises two or more inking inputs having different colors, texts, and/or shapes that represent different filtering parameters, and further comprising receiving a user input requesting to apply a filtering parameter to display a route between locations corresponding to the filtering parameter applied, and in response displaying a route between the locations based upon the filtering parameter applied.

10. A computing system, comprising:
a display device (606);
a processor (602); and
memory (604) storing instructions executable by the processor to
send (202) a map to the display device, the display device configured to display the map;
receive (204) user input of a first inking input and a second inking input on the displayed map, the first inking input and the second inking input each comprising one or more of a color, a shape, and/or a text defining one or more filter parameters;
determine (210) a map location of each inking input received;
identify the one or more filter parameters of each of the first inking input and the second inking input;
display (218) one or more of a route and a collection of map locations;
receive user input (220) selecting one or more filters, the one or more filters based on the one or more filter parameters associated with each of the first inking input and the second inking input; and
filter the display of the one or more of the route and the collection of map locations based on the one or more filters selected.

11. The system of claim 10, wherein the first inking input comprises a first shape and the second inking input comprises a second shape that is different than the first shape, and wherein the instructions are executable to identify a first filter parameter associated with the first inking input and a second filter parameter associated with the second inking input that is different than the first filter parameter.

12. The system of claim 10, wherein the instructions are executable to identify the one or more filter parameters based on text represented by one or more of the first inking input and the second inking input.

13. The system of claim 10, wherein the first inking input comprises a first inking input color and the second inking input comprises a second inking input color, and wherein the instructions are executable to identify the one or more filter parameters based on the first inking input color and the second inking input color.

14. The system of claim 10, wherein the instructions are executable to identify the one or more filter parameters based on a predefined meaning associated with the one or more of the color, the shape, and/or the text.

15. A computer-readable medium comprising instructions which, when executed by a computer, cause the computer to carry out the method of any of claims 1 to 9.

## Patentansprüche

1. Auf einer Rechenvorrichtung ausgeführtes Verfahren, umfassend:
Anzeigen (202) einer Karte auf einer Anzeigevorrichtung, die funktionell mit der Rechenvorrichtung gekoppelt ist;
Empfangen (204) einer Benutzereingabe einer ersten Farbwerteingabe und einer zweiten Farbwerteingabe auf der angezeigten Karte, wobei die erste Farbwerteingabe und die zweite Farbwerteingabe jeweils eine oder mehrere einer Farbe, einer Form und/oder eines Textes umfassen, die einen oder mehrere Filterparameter definieren;
Anzeigen eines Vermerks (208) auf der Anzeigevorrichtung für jede empfangene Farbwerteingabe;
Bestimmen einer Kartenposition (210) für jede empfangene Farbwerteingabe;
Identifizieren des einen oder der mehreren Filterparameter von jeder der ersten und der zweiten Farbwerteingabe;
Anzeigen (218) einer oder mehrerer einer Route und einer Sammlung von Kartenpositionen auf der Anzeigevorrichtung;
Empfangen von Benutzereingaben (220), mit denen einen oder mehrere Filter ausgewählt werden, wobei der eine oder die mehreren Filter auf dem einen oder den mehreren Filterparametern basieren, die jeweils der ersten und dem zweiten Farbwerteingabe zugeordnet sind; und
Filtern der Anzeige der einen oder mehreren der Route und der Sammlung von Kartenpositionen basierend auf dem einen oder den mehreren ausgewählten Filtern.

2. Verfahren nach Anspruch 1, wobei sowohl die erste als auch die zweite Farbwerteingabe eine Form umfasst und wobei das Filtern der Anzeige zumindest teilweise auf der Form basiert.

3. Verfahren nach Anspruch 1, wobei sowohl die erste als auch die zweite Farbwerteingabe Text umfasst und wobei das Filtern der Anzeige zumindest teilweise auf dem Text basiert.

4. Verfahren nach Anspruch 1, wobei sowohl die erste als auch die zweite Farbwerteingabe eine Farbe umfasst und wobei das Filtern der Anzeige zumindest teilweise auf der Farbe basiert.

5. Verfahren nach Anspruch 1, wobei das Identifizieren des einen oder der mehreren Filterparameter das Bestimmen einer vordefinierten Bedeutung umfasst, die der Farbe, der Form und/oder dem Text zugeordnet ist.

6. Verfahren nach Anspruch 1, wobei das Identifizieren des einen oder der mehreren Filterparameter das Bestimmen einer benutzerdefinierten Bedeutung umfasst, die der Farbe, der Form und/oder dem Text zugeordnet ist.

7. Verfahren nach Anspruch 1, weiter umfassend, nach dem Identifizieren des einen oder der mehreren Filterparameter, das Durchführen einer Suche nach Informationen bezüglich einer Position, die einer ausgewählten Farbwerteingabe zugeordnet ist, und weiterhin umfassend das Anzeigen von Suchergebnissen für die Position, die der ausgewählten Farbwerteingabe zugeordnet ist.

8. Verfahren nach Anspruch 1, wobei das Empfangen einer Benutzereingabe der ersten Farbwerteingabe und der zweiten Farbwerteingabe auf der angezeigten Karte weiter das Empfangen einer Benutzereingabe einer Vielzahl von Farbwerteingaben an einer Vielzahl von entsprechenden Positionen umfasst, und wobei das Anzeigen der Route das Anzeigen der Route zwischen der Vielzahl von entsprechenden Positionen umfasst.

9. Verfahren nach Anspruch 8, wobei die Vielzahl von Farbwerteingaben zwei oder mehr Farbwerteingaben umfasst, die unterschiedliche Farben, Texte und/oder Formen aufweisen, die unterschiedliche Filterparameter darstellen, und weiter umfassend das Empfangen einer Benutzereingabe, die das Anwenden eines Filterparameters anfordert, um eine Route zwischen Positionen anzuzeigen, die dem angewendeten Filterparameter entsprechen, und als Reaktion darauf das Anzeigen einer Route zwischen den Positionen basierend auf dem angewendeten Filterparameters.

10. Rechensystem, umfassend:
eine Anzeigevorrichtung (606);
einen Prozessor (602); und
einen Speicher (604), der Anweisungen speichert, die von dem Prozessor ausführbar sind, um
eine Karte an die Anzeigevorrichtung zu senden (202), wobei die Anzeigevorrichtung so konfiguriert ist, dass sie die Karte anzeigt;
eine Benutzereingabe einer ersten Farbauftragseingabe und einer zweiten Farbauftragseingabe auf der angezeigten Karte zu empfangen (204), wobei die erste Farbauftragseingabe und die zweite Farbauftragseingabe jeweils eine oder mehrere einer Farbe, einer Form und/oder eines Textes umfassen, die einen oder mehrere Filterparameter definieren;
um eine Kartenposition jeder empfangenen Farbwerteingabe zu bestimmen (210);
um den einen oder die mehreren Filterparameter von jeder der ersten und der zweiten Farbwerteingabe zu identifizieren;
eine oder mehrere einer Route und einer Sammlung von Kartenpositionen anzuzeigen (218);
Benutzereingaben (220) zu empfangen, mit denen einen oder mehrere Filter ausgewählt werden, wobei der eine oder die mehreren Filter auf dem einen oder den mehreren Filterparametern basieren, die jeweils der ersten und dem zweiten Farbwerteingabe zugeordnet sind; und
die Anzeige der einen oder mehreren der Route und der Sammlung von Kartenpositionen basierend auf dem einen oder den mehreren ausgewählten Filtern zu filtern.

11. System nach Anspruch 10, wobei die erste Farbwerteingabe eine erste Form und die zweite Farbwerteingabe eine zweite Form umfasst, die sich von der ersten Form unterscheidet, und wobei die Anweisungen ausführbar sind, um einen ersten Filterparameter, der der ersten Farbwerteingabe zugeordnet ist, und einen zweiten Filterparameter, der der zweiten Farbwerteingabe zugeordnet ist und sich von dem ersten Filterparameter unterscheidet, zu identifizieren.

12. System nach Anspruch 10, wobei die Anweisungen ausführbar sind, um den einen oder die mehreren Filterparameter basierend von Text zu identifizieren, der durch eine oder mehrere der ersten Farbwerteingabe und zweiten Farbwerteingabe dargestellt wird.

13. System nach Anspruch 10, wobei die erste Farbwerteingabe eine erste Farbwerteingabefarbe umfasst und die zweite Farbwerteingabe eine zweite Farbwerteingabefarbe umfasst, und wobei die Anweisungen ausführbar sind, um den einen oder die mehreren Filterparameter basierend der ersten Farbwerteingabefarbe und der zweiten Farbwerteingabefarbe zu identifizieren.

14. System nach Anspruch 10, wobei die Anweisungen ausführbar sind, um den einen oder die mehreren Filterparameter basierend auf einer vordefinierten Bedeutung zu identifizieren, die dem einen oder mehreren der Farbe, der Form und/oder des Textes zugeordnet ist.

15. Rechnerlesbares Medium, umfassend Anweisungen, die, wenn sie von einem Rechner ausgeführt werden, den Rechner veranlassen, das in einem der Ansprüche 1 bis 9 beanspruchte Verfahren durchzuführen.

## Revendications

1. Adopté sur un dispositif informatique, procédé comprenant :
l'affichage (202) d'une carte sur un dispositif d'affichage couplé en fonctionnement au dispositif informatique ;
la réception (204) d'une entrée d'utilisateur d'une première entrée d'encrage et d'une seconde entrée d'encrage sur la carte affichée, la première entrée d'encrage et la seconde entrée d'encrage comprenant chacune un ou plusieurs parmi une couleur, une forme et/ou un texte définissant un ou plusieurs paramètres de filtre ;
l'affichage d'une annotation (208) sur le dispositif d'affichage pour chaque entrée d'encrage reçue ;
la détermination d'un emplacement de carte (210) de chaque entrée d'encrage reçue ;
l'identification des un ou plusieurs paramètres de filtre de chacune de la première entrée d'encrage et de la seconde entrée d'encrage ;
l'affichage (218) sur le dispositif d'affichage d'un ou plusieurs parmi un itinéraire et une collection d'emplacements de carte ;
la réception d'une entrée d'utilisateur (220) sélectionnant un ou plusieurs filtres, les un ou plusieurs filtres étant basés sur les un ou plusieurs paramètres de filtre associés à chacune de la première entrée d'encrage et de la seconde entrée d'encrage ; et
le filtrage de l'affichage des un ou plusieurs parmi l'itinéraire et la collection d'emplacements de carte sur la base des un ou plusieurs filtres sélectionnés.

2. Procédé selon la revendication 1, dans lequel chacune de la première entrée d'encrage et de la seconde entrée d'encrage comprend une forme et dans lequel le filtrage de l'affichage est basé au moins en partie sur la forme.

3. Procédé selon la revendication 1, dans lequel chacune de la première entrée d'encrage et de la seconde entrée d'encrage comprend un texte et dans lequel le filtrage de l'affichage est basé au moins en partie sur le texte.

4. Procédé selon la revendication 1, dans lequel chacune de la première entrée d'encrage et de la seconde entrée d'encrage comprend une couleur et dans lequel le filtrage de l'affichage est basé au moins en partie sur la couleur.

5. Procédé selon la revendication 1, dans lequel l'identification des un ou plusieurs paramètres de filtre comprend la détermination d'une signification prédéfinie associée à la couleur, la forme et/ou le texte.

6. Procédé selon la revendication 1, dans lequel l'identification des un ou plusieurs paramètres de filtre comprend la détermination d'une signification définie par l'utilisateur associée à la couleur, la forme et/ou le texte.

7. Procédé selon la revendication 1, comprenant en outre, après l'identification des un ou plusieurs paramètres de filtre, l'exécution d'une recherche pour des informations concernant un emplacement associé à une entrée d'encrage sélectionnée, et comprenant en outre l'affichage de résultats de recherche pour l'emplacement associé à l'entrée d'encrage sélectionnée.

8. Procédé selon la revendication 1, dans lequel la réception d'une entrée d'utilisateur de la première entrée d'encrage et la seconde entrée d'encrage sur la carte affichée comprend en outre la réception d'une entrée d'utilisateur d'une pluralité d'entrées d'encrage au niveau d'une pluralité d'emplacements correspondants, et dans lequel l'affichage de l'itinéraire comprend l'affichage de l'itinéraire entre la pluralité d'emplacements correspondants.

9. Procédé selon la revendication 8, dans lequel la pluralité d'entrées d'encrage comprend au moins deux entrées d'encrage ayant des couleurs, des textes et/ou des formes différents qui représentent des paramètres de filtrage différents, et comprenant en outre la réception d'une entrée d'utilisateur demandant d'appliquer un paramètre de filtrage pour afficher un itinéraire entre les emplacements correspondant au paramètre de filtrage appliqué, et en réponse, l'affichage d'un itinéraire entre les emplacements sur la base du paramètre de filtrage appliqué.

10. Système informatique comprenant :
un dispositif d'affichage (606) ;
un processeur (602) ; et
une mémoire (604) stockant des instructions exécutables par le processeur pour
envoyer (202) une carte au dispositif d'affichage, le dispositif d'affichage étant configuré pour afficher la carte ;
recevoir (204) une entrée d'utilisateur d'une première entrée d'encrage et d'une seconde entrée d'encrage sur la carte affichée, la première entrée d'encrage et la seconde entrée d'encrage comprenant chacune un ou plusieurs parmi une couleur, une forme et/ou un texte définissant un ou plusieurs paramètres de filtre ;
déterminer (210) un emplacement de carte de chaque entrée d'encrage reçue ;
identifier les un ou plusieurs paramètres de filtre de chacune de la première entrée d'encrage et de la seconde entrée d'encrage ;
afficher (218) un ou plusieurs parmi un itinéraire et une collection d'emplacements de carte ;
recevoir une entrée d'utilisateur (220) sélectionnant un ou plusieurs filtres, les un ou plusieurs filtres étant basés sur les un ou plusieurs paramètres de filtre associés à chacune de la première entrée d'encrage et de la seconde entrée d'encrage ; et
filtrer l'affichage des un ou plusieurs parmi l'itinéraire et la collection d'emplacements de carte sur la base des un ou plusieurs filtres sélectionnés.

11. Système selon la revendication 10, dans lequel la première entrée d'encrage comprend une première forme et la seconde entrée d'encrage comprend une seconde forme qui est différente de la première forme, et dans lequel les instructions sont utilisables pour identifier un premier paramètre de filtre associé à la première entrée d'encrage et un second paramètre de filtre associé à la seconde entrée d'encrage qui est différente du premier paramètre de filtre.

12. Système selon la revendication 10, dans lequel les instructions sont utilisables pour identifier les un ou plusieurs paramètres de filtre sur la base d'un texte représenté par une ou plusieurs parmi la première entrée d'encrage et la seconde entrée d'encrage.

13. Système selon la revendication 10, dans lequel la première entrée d'encrage comprend une première couleur d'entrée d'encrage et la seconde entrée d'encrage comprend une seconde couleur d'entrée d'encrage, et dans lequel les instructions sont utilisables pour identifier les un ou plusieurs paramètres de filtre sur la base de la première couleur d'entrée d'encrage et de la seconde couleur d'entrée d'encrage.

14. Système selon la revendication 10, dans lequel les instructions sont utilisables pour identifier les un ou plusieurs paramètres de filtre sur la base d'une signification prédéfinie associée à l'un ou plusieurs parmi la couleur, la forme et/ou le texte.

15. Support lisible par ordinateur comprenant des instructions qui, quand elles sont exécutées par un ordinateur, amènent l'ordinateur à réaliser le procédé selon l'une quelconque des revendications 1 à 9.
